# EUROPÄISCHE PATENTSCHRIFT

(11) **EP 2 670 664 B1**
(45) Veröffentlichungstag und Bekanntmachung des Hinweises auf die Patenterteilung: **29.03.2017**
(21) Anmeldenummer: 12714931.8
(22) Anmeldetag: 02.02.2012
(51) Int. Cl.: B64D 37/00, F16L 9/18, F16L 39/00, B21D 51/10, F16L 7/00, F16L 9/02, F16L 9/19, B23K 26/282

(54) **GEBOGENES DOPPELWANDIGES ROHR UND HERSTELLUNGSVERFAHREN DES GEBOGENEN DOPPELWANDIGEN ROHRES**
CURVED DOUBLE-WALL PIPE AND PRODUCTION PROCESS A CURVED DOUBLE-WALL PIPE
TUYAU COURBÉ À DOUBLE PAROI ET PROCÉDÉ DE FABRICATION DUDIT TUYAU

(30) Priorität: 05.02.2011 DE 102011010385
(43) Veröffentlichungstag der Anmeldung: 11.12.2013
(73) Patentinhaber: Airbus Operations GmbH, 21129 Hamburg (DE)
(72) Erfinder: BAUR, Alexander, 86136 Friedberg (DE); HEIMERDINGER, Christoph, 88085 Langenargen (DE); LANG, Roland, 85457 Wörth (DE); LANGER, Thomas, 86316 Friedberg (DE); MEISTER, Heinz, 84405 Dorfen (DE); MESSNER, Josef, 86356 Neusäss (DE); SCHWARZE, Dirk, 86853 Langerringen (DE)
(74) Vertreter: Kopf Westenberger Wachenhausen Patentanwälte PartG mbB
(86) Internationale Anmeldenummer: PCT/DE2012/000086
(87) Internationale Veröffentlichungsnummer: WO 2012/103875

(56) Entgegenhaltungen:
- WO-A1-01/43872
- DE-A1- 2 048 424
- DE-B4-102005 028 766
- JP-A- 11 248 048
- US-A- 4 590 652
- US-A1- 2006 174 962
- US-A1- 2010 018 599
- US-B2- 7 451 541

## Beschreibung

### Gebiet der Erfindung

Die Erfindung betrifft gebogene doppelwandige Rohre. Insbesondere betrifft die Erfindung ein gebogenes doppelwandiges Rohr vorzugsweise für ein Transportmittel, ein Transportmittel mit einem gebogenen doppelwandigen Rohr und ein Verfahren zum Herstellen eines gebogenen doppelwandigen Rohres.

### Technologischer Hintergrund

In Transportmitteln, und insbesondere in Luftfahrzeugen, werden doppelwandige Rohre zu Rohrleitungen für Kraftstoffsysteme zusammengefügt. Diese Rohre weisen ein Innenrohr und ein das Innenrohr unter Bildung eines Zwischenraums umgebendes Außenrohr auf. Die Rohrleitungen können dann beispielsweise zur Treibstoffversorgung eines zusätzlichen, turbinenbetriebenen Hilfsaggregats im Heck des Luftfahrzeugs oder zur Verbindung des in der Regel im Höhenleitwerk untergebrachten Trimmtanks mit dem Haupttank des Luftfahrzeugs verwendet werden.

Die Rohrleitungen für Luftfahrzeuge sollten nach Maßgabe einschlägiger Sicherheits- und Luftfahrtvorschriften zur Verhinderung von Unglücksfällen doppelwandig ausgeführt sein, um beispielsweise ein unkontrolliertes Austreten von Treibstoff zu verhindern.

Darüber hinaus ist der Einsatz der doppelwandingen Rohre zum Zwecke der Wärmeübertragung möglich. Hierbei wird das innere Rohr von einem Fluid durchströmt. Der Raum zwischen Innen- und Außenrohr wird ebenfalls von einem Fluid durchströmt, wobei zwischen diesen beiden Fluids eine Temperaturdifferenz besteht. Die Fließrichtung ist abhängig vom Einsatzgebiet, ebenso der Aggregatszustand der beiden Fluids. Die Wärmeübertragung wird unter anderem auch durch die Leitfähigkeit der Werkstoffe der beiden Rohre beeinflusst. Das Einsatzgebiet ist sowohl im stationären und mobilen Anlagenbau, als auch in Transportmitteln möglich.

Doppelwandige, gekrümmte Rohre weisen beispielsweise ein Außenrohr auf, in welches ein Schlauch koaxial eingeschoben ist. Der Abstand zwischen dem Schlauch und dem Außenrohr wird durch Abstandshalter (Spacer) sichergestellt, welche den Schlauch koaxial zum Außenrohr abstützen. Aus geometrischen Gründen kann es jedoch sein, dass ein starres gebogenes Innenrohr in ein ebenso geformtes Außenrohr nicht integriert (bzw. eingeschoben) werden kann, wie es insbesondere bei starken bzw. Mehrfachkrümmungen der Fall ist.

DE 10 2005 028 766 B4 und US 2009/0025815 A1 beschreiben gekrümmte Rohrleitungen mit einem metallischen Innenrohr. Bei der Herstellung wird um das Innenrohr ein Stützkern aus Styropor gelegt, der daraufhin mit faserverstärktem Epoxidharzmaterial umwickelt wird. Nach dem Aushärten des so entstandenen Außenrohres aus faserverstärktem Epoxidharzmaterial wird der Stützkern aus Styropor durch Ausspülen mit einem Lösungsmittel entfernt.

US 4,590,652 A offenbart den Oberbegriff von Anspruch 1 und beschreibt ein nicht-lineares doppelwandiges Rohr samt Herstellungsverfahren desselben. Ein Innenrohr ist konzentrisch in einem Außenrohr angeordnet. Das Außenrohr wird mit einem Laser in Längsrichtung des Außenrohres in zwei Halbschalen geschnitten. Im Außenrohr sind Lüftungslöcher enthalten, um einen Wärmeaustausch zu ermöglichen.

US 7,451,541 B2 beschreibt eine Fluidleitung, um welche als Wärmeschutz mehrere Segmente gelegt werden, welche in zusammengesetztem Zustand einem Außerohr entsprechen. Die Segmente des Außenrohres werden als Halbschalen bereitgestellt, welche in Längsrichtung des Außenrohrs getrennt sind.

### Zusammenfassung der Erfindung

Es ist eine Aufgabe der Erfindung, ein alternatives doppelwandiges Rohr sowie ein entsprechendes Herstellungsverfahren anzugeben.

Diese Aufgabe wird durch die Merkmale der unabhängigen Patentansprüche gelöst. Erfindungsgemäß wird ein doppelwandiges Rohr und ein Verfahren zum Herstellen eines doppelwandingen Rohres gemäß den unabhängigen Patentansprüchen angegeben. Weiterbildungen der Erfindung ergeben sich aus den Unteransprüchen.

Gemäß einem ersten Aspekt der Erfindung ist ein doppelwandiges Rohr mit den Merkmalen von Anspruch 1 angegeben.

Auf diese Weise ist es möglich, robuste doppelwandige Rohre anzugeben, welche einen vergleichsweise geringen Außendurchmesser und somit ein vergleichsweise geringes Gesamtgewicht aufweisen. Ebenso ist es möglich doppelwandige Rohre mit starker bzw. Mehrfachkrümmung anzugeben.

Auf entsprechende Weise können auch T-Verbindungen für derartige Rohre hergestellt werden.

Gemäß einer Ausführungsform der Erfindung ist das Innenrohr metallisch. Auf diese Weise kann die Wandstärke des Innenrohres entsprechend niedrig dimensioniert sein, so dass sich ein verhältnismäßig geringer Außendurchmesser realisieren lässt.

Gemäß einer weiteren Ausführungsform der Erfindung ist das Außenrohr metallisch.

Beispielsweise kann das Außenrohr aus Aluminium, einer bestimmten Aluminiumlegierung, Eisen, Nickelbasis, Zink, Magnesium oder Titan bestehen. Ebenso kann das Innenrohr aus Aluminium, einer bestimmten Aluminiumlegierung, Eisen, Nickel, Magnesium oder Titan bestehen. Als Außenrohr kann jedes Metall verwendet werden, das schweißbar ist. Als Innenrohr können zusätzlich Rohre verwendet werden, die aus nicht schmelzschweißbaren Legierungen bestehen. Je nach Anwendung kann das Innenrohr auch aus Kunststoff bestehen oder ein verstärkter Kunststoff sein.

Insbesondere ist es vorteilhaft, wenn sowohl Außen- als auch Innenrohr aus einem schweißbaren Material bestehen, so dass die Rohrsegmente des Außenrohres bei der Fertigung aneinandergeschweißt werden können und so dass Flanschverbindungen an den beiden Enden der doppelwandigen Rohre angeschweißt werden können. Die Flanschverbindungen an den Enden können auch geswaget werden.

Weil die zwei halbschalenartigen Rohrsegmente des Außenrohres durch Teilen eines Ausgangsrohres hergestellt sind, kann das Aussenrohr unabhängig von dem Innenrohr gefertigt werden und wird dann entlang seiner Längserstreckung in zwei oder mehr Teile geteilt. Das Innenrohr kann mit Abstandshaltern versehen werden und die verschiedenen Teile (Segmente) des Ausgangsrohres können dann um das Innenrohr herumgelegt und miteinander verbunden (gefügt) werden.

Bei der neutralen Biegelinie handelt es sich um die gemeinsame Mittellinie von Innen- und Außenrohr, nachdem die verschiedenen Rohrbestandteile zusammengesetzt sind. Die neutrale Biegelinie zeichnet sich dadurch aus, dass sie bezüglich dem Außenrohr die Ebene darstellt, in welcher beim Biegen das Außenrohr nicht oder zumindest nur geringfügig gedehnt oder gestaucht wird. Zudem ist hier mit dem geringsten "Verzug" beim Trennen zu rechnen und das Zusammenfügen ist spanntechnisch relativ einfach möglich. Diese Ebene definiert die Trennlinien (auch Trennstellen genannt), entlang denen das Außenrohr nach dem Biegevorgang aufgetrennt wird. Ebenso definiert diese Ebene die Position der beim Zusammenfügen der Außenrohrsegmente entstehenden Fügelinien, bei denen es sich beispielsweise um Schweißnähte handelt.

Gemäß einer weiteren Ausführungsform der Erfindung handelt es sich bei dem doppelwandigen Rohr um ein Rohr einer Treibstoffleitung. Eine solche Treibstoffleitung kann aus mehreren dieser doppelwandigen Rohre bestehen, welche aneinandergesetzt sind. Alternativ kann es sich auch um eine Hydraulikleitung handeln. In der Regel wird es sich um eine Leitung mit besonderer Sicherheitsrelevanz handeln.

Gemäß einem weiteren Aspekt der Erfindung ist ein Transportmittel mit einem oben und im Folgenden beschriebenen doppelwandigen Rohr angegeben.

Bei dem Transportmittel handelt es sich beispielsweise um ein Luftfahrzeug, ein Wasserfahrzeug, ein Schienenfahrzeug oder ein Straßenfahrzeug. Insbesondere kann es sich um ein Passagierflugzeug handeln.

Gemäß einem weiteren Aspekt der Erfindung ist ein Verfahren zum Herstellen eines gebogenen doppelwandigen Rohres nach Anspruch 7 angegeben.

Gemäß einer weiteren Ausführungsform der Erfindung handelt es sich bei dem so hergestellten Rohr um ein oben und im Folgenden beschriebenes gebogenes doppelwandiges Rohr, insbesondere um eine Treibstoffleitung. Alternativ kann es sich um eine Hydraulikleitung handeln.

Gemäß einer weiteren Ausführungsform der Erfindung weist das Verfahren den Schritt des Anfügens eines bzw. zweier Flansche an einem bzw. beiden Enden des Außenrohres auf, so dass verschiedene so hergestellte doppelwandige Rohre miteinander verbunden werden können, um eine komplette Rohrleitung auszubilden.

Gemäß einer weiteren Ausführungsform der Erfindung erfolgt daraufhin das Aufbringen eines Oberflächenschutzes auf eine Innenseite und auf eine Außenseite des Außenrohres.

Insbesondere können Innenrohr und Außenrohr aus Metall oder einer Metalllegierung hergestellt sein, in welchem Falle die Rohrsegmente, in welche das Ausgangsrohr geteilt wurde, durch Schweißen zusammengefügt werden können.

Im Folgenden werden mit Verweis auf die Figuren Ausführungsbeispiele der Erfindung beschrieben.

### Kurze Beschreibung der Figuren

Fig. 1A zeigt ein doppelwandiges, gebogenes Rohr gemäß einem Ausführungsbeispiel der Erfindung.
Fig. 1B zeigt eine Schnittdarstellung entlang der Schnittstelle A-A der Fig. 1A.
Fig. 2 zeigt ein Verfahren zur Herstellung eines doppelwandigen Rohres gemäß einem Ausführungsbeispiel der Erfindung.
Fig. 3 zeigt ein Luftfahrzeug mit doppelwandigen Rohren gemäß einem Ausführungsbeispiel der Erfindung.
Fig. 4 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

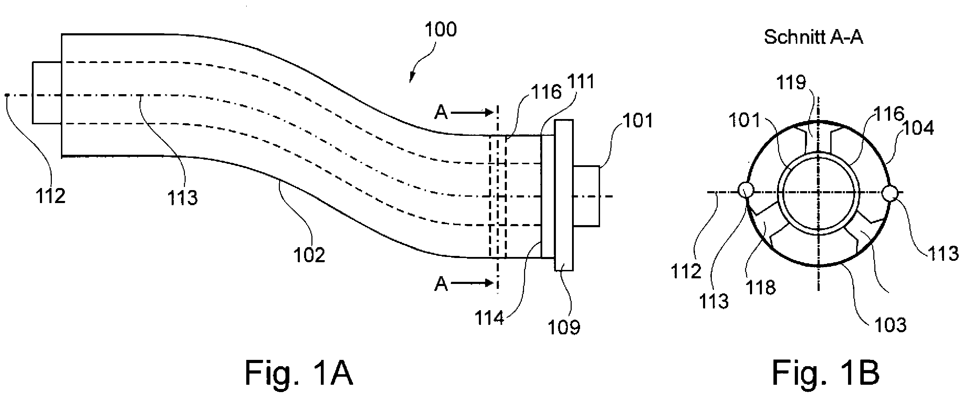

Fig. 1A zeigt ein doppelwandiges Rohr 100 gemäß einem Ausführungsbeispiel der Erfindung. Das doppelwandige Rohr 100 weist ein Innenrohr 101 und ein das Innenrohr zumindest teilweise umgebendes Außenrohr 102 auf. Am einen Ende 111 des Außenrohres 102 ist ein Flansch 109 angebracht, der beispielsweise an das Außenrohr 102 angeschweißt oder anderweitig mit dem Außenrohr 102 verbunden ist. Beispielsweise ist es möglich, den Flansch anzuschrauben und/oder zu verkleben. Auch am entgegengesetzten Ende kann ein Flansch angebracht sein.

Das Anschweißen des Flansches erfolgt beispielsweise entlang der endseitigen Schweißlinie 114.

Auf der Mittelachse der beiden Rohre 101, 102 befindet sich die neutrale Biegelinie 112, die vorzugsweise als Trennebene verwendet wird, und die Lage der Trennstellen 113 des Ausgangsrohres definiert.

Weiterhin können mehrere Distanzhalter (Spacer) 116 vorgesehen sein, welche dafür sorgen, dass das Innenrohr 101 koaxial zum Außenrohr 102 positioniert ist.

Diese Abstandshalter 116 können hierfür beispielsweise ringförmig um das Innenrohr gelegt sein und mehrere "Beine" 117, 118, 119 aufweisen, die beispielsweise einen Winkel von jeweils 120 Grad zueinander einschließen und für die Abstützung zwischen dem Innenrohr 101 und der Innenwandung des Außenrohres 102 sorgen. Dies ist in Fig. 1B zu erkennen, welche eine Schnittdarstellung entlang der Schnittlinie A-A der Fig. 1A darstellt.

Auch sind in der Fig. 1B die beiden Schweißnähte entlang der beiden Trennlinien 113 zu erkennen, durch welche die obere Halbschale 104 des Außenrohres mit der unteren Halbschale 103 des Außenrohres verbunden ist.

Es ist zu beachten, dass in den Fig. 1A und 1B das Verhältnis von Länge zu Durchmesser eines typischen Rohres verkürzt dargestellt ist. Es können Rohrdurchmesser von bis zu 145 mm oder darüber hinaus vorgesehen sein. Insbesondere können die Außenrohre Durchmesser von 50 mm aufweisen. Eine mögliche Rohrlänge beträgt 1 m. Es können aber auch längere oder kürzere Rohre bereitgestellt werden.

Weiterhin sind der Abstandshalter und der Flansch am Außenrohr nur beispielhaft dargestellt. Es können auch andere Flansche und andere Arten von Abstandshaltern eingesetzt werden. Auch mag es sein, dass die Anbringung eines Flansches nicht notwendig ist, da beispielsweise keine Anbindung zu einem weiteren Rohr gewünscht ist oder die Anbindung auf andere Weise erfolgt.

Im übrigen kann natürlich auch ein entsprechender Flansch am anderen Rohrende vorgesehen sein.

Die Schweißverbindung zwischen den beiden Rohrsegmenten des Außenrohres erfolgt beispielsweise durch Laserstrahlschweißen.

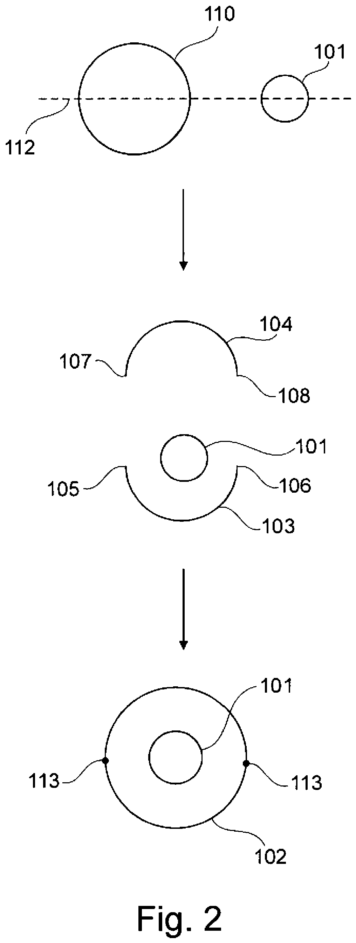

Fig. 2 zeigt ein Verfahren zum Herstellen eines doppelwandigen Rohres gemäß einem Ausführungsbeispiel der Erfindung. Zunächst werden das Innenrohr 101 und ein das spätere Außenrohr darstellendes Ausgangsrohr 110 getrennt voneinander geformt, so dass sie über eine gleichartig verlaufende neutrale Biegelinie 112 verfügen. Das Ausgangsrohr 110 wird vorzugsweise entlang der neutralen Biegelinie getrennt, so dass zwei halbschalenartige Rohrsegmente 103, 104 entstehen. Anschließend wird das mit Abstandshaltern versehene Innenrohr 101 in die untere Halbschale 103 des Außenrohres eingebracht. Daraufhin wird das Außenrohr entlang der vormals aufgetrennten Biegelinie wieder zusammengefügt. Hierfür werden die beiden halbschalenartigen Rohrsegmente 103,104 entlang ihrer längsseitigen Ränder 105, 106, 107,108 beispielsweise durch Schweißen zusammengefügt. Dabei entstehen an den ehemaligen Trennstellen 113 Schweißnähte.

Im nächsten Schritt werden die Flansche des Außenrohres gefügt und es erfolgt die Aufbringung des Oberflächenschutzes auf die Innen- und Außenseite des Außenrohres. Die Flanschbereiche und elektrischen Kontaktflächen können hierzu abgedeckt werden.

Somit kann eine signifikante Reduktion des Bauteilgewichts erzielt werden. Ein Kriterium für den Innendurchmesser des Außenrohres ist der einzuhaltende Mindestabstand zum Innenrohr (oder, wie im Stand der Technik, zum Innenschlauch), so dass bei Verwendung eines metallischen Innenrohres infolge seiner höheren Festigkeit der Außenrohrdurchmesser verkleinert werden kann. Dies kann zu einem reduzierten Platzbedarf für das Leitungssystem und zu verringerten Herstellungskosten führen, da die Halbzeuge kleiner dimensioniert werden können und weniger Material erforderlich ist, um das Außenrohr herzustellen.

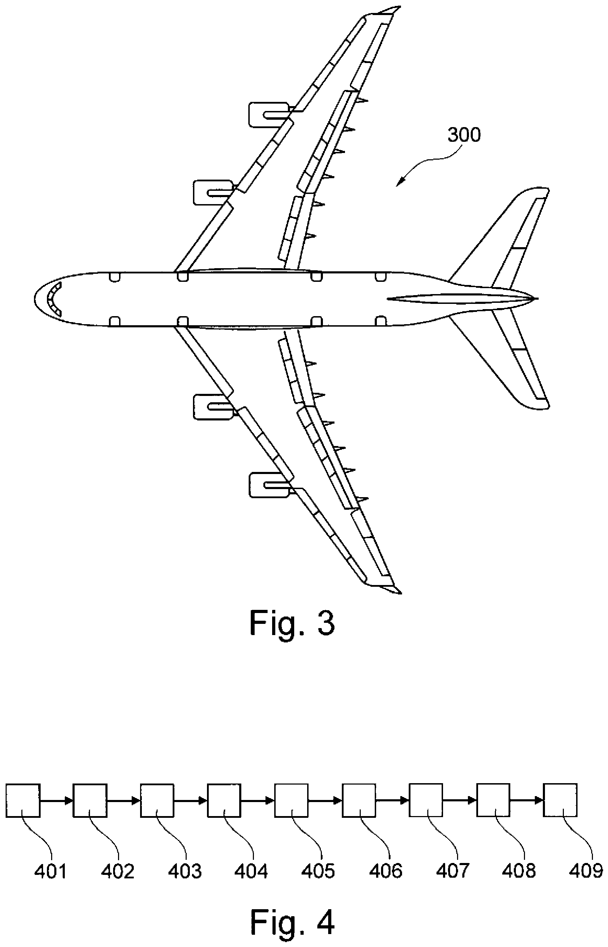

Fig. 3 zeigt ein Luftfahrzeug 300, welches die oben beschriebenen doppelwandigen Rohre aufweist. Diese Rohre werden beispielsweise als Kraftstoffleitungen zwischen einem Kraftstofftank und einem Triebwerk oder zur Verbindung eines Trimmtanks mit einem Haupttank eingesetzt.

Fig. 4 zeigt ein Flussdiagramm eines Verfahrens gemäß einem Ausführungsbeispiel der Erfindung. In Schritt 401 erfolgt eine Ausbildung eines Innenrohres. In Schritt 402 erfolgt eine davon getrennte Ausbildung eines Ausgangsrohres, das einen entsprechend größeren Durchmesser als das Innenrohr aufweist. In Schritt 403 wird dieses Ausgangsrohr entlang zweier Trennlinien in zwei halbschalenförmige Rohrsegmente aufgetrennt und in Schritt 404 wird dann das Innenrohr mit Abstandshaltern versehen und in Schritt 405 in eines der beiden Rohrsegmente eingelegt. In Schritt 406 wird das zweite Rohrsegment in Position gebracht und die beiden Rohrsegmente werden in Schritt 407 miteinander verbunden, beispielsweise durch Schweißen entlang der beiden Trennlinien.

In Schritt 408 können an den Rohrenden Flansche angebracht werden und in Schritt 409 erfolgt die Aufbringung eines Oberflächenschutzes auf Innen- und Außenseite des Außenrohres.

Durch den Einsatz von metallischen doppelwandigen Rohren (sog. Rohr-in-Rohr-Baugruppen) lässt sich das gesamte Bauteilgewicht im Vergleich zu doppelwandigen Rohren mit koaxial angebrachten Innenschläuchen deutlich reduzieren, da der schwere Schlauch, der bei der herkömmlichen Lösung verwendet wird, durch ein leichtes Innenrohr ersetzt wird. Der eingebrachte Schlauch ist verhältnismäßig teuer, wohingegen das eingebrachte Rohr sehr einfach und kostengünstig hergestellt werden kann. Zudem sind auf diese Weise doppelwandige Rohre mit starker bzw. Mehrfachkrümmung möglich. Für die Erfindung ist es unerheblich, welche metallischen Werkstoffe für das Innen- bzw. Außenrohr eingesetzt werden. Sollen für den Fügevorgang Schweißverfahren angewendet werden, bietet sich der Einsatz von schweißbaren Metallen oder Metalllegierungen an. Beispielsweise können die Rohre aus Titan oder Aluminium gefertigt sein.

## Patentansprüche

1. Doppelwandiges Rohr, insbesondere für ein Transportmittel, das Rohr (100) aufweisend:
ein Außenrohr (102);
ein in dem Außenrohr verlaufendes Innenrohr (101);
wobei das Innenrohr zur Leitung eines Fluids ausgeführt ist und beabstandet zum Außenrohr angeordnet ist;
wobei das Außenrohr (102) zwei halbschalenartige Rohrsegmente (103, 104) aufweist, die zur Ausbildung des Außenrohres (102) entlang ihrer längsseitigen Ränder (105, 106, 107, 108) zusammengefügt sind; wobei die zwei halbschalenartigen Rohrsegmente (103, 104) des Außenrohres (102) durch Teilen eines Ausgangsrohres (110) hergestellt sind; 20 wobei das doppelwandige Rohr ein gebogenes Rohr ist;
**dadurch gekennzeichnet, dass**
die längsseitigen Ränder (105, 106, 107, 108) der halbschalenartigen Rohrsegmente (103, 104) durch Teilen des Ausgangsrohres (110) entlang einer neutralen Biegelinie (112) des gebogenen Ausgangsrohres (110) hergestellt sind und wobei das Innenrohr (101) und das Ausgangsrohr (110) über eine gleichartig verlaufende neutrale Biegelinie (112) verfügen.

2. Doppelwandiges Rohr nach Anspruch 1, wobei das Innenrohr (101) metallisch ist.

3. Doppelwandiges Rohr nach einem der vorhergehenden Ansprüche, wobei das Außenrohr (102) metallisch ist.

4. Doppelwandiges Rohr nach einem der vorhergehenden Ansprüche, wobei es sich bei dem doppelwandigen Rohr (100) um eine Treibstoffleitung oder Hydraulikleitung handelt.

5. Transportmittel mit einem doppelwandigem Rohr nach einem der Ansprüche 1 bis 4.

6. Transportmittel nach Anspruch 5. ausgeführt als Luftfahrzeug (300).

7. Verfahren zum Herstellen eines gebogenen doppelwandigen Rohres (100), das Verfahren aufweisend die Schritte:
Ausbilden eines gebogenen Innenrohres (101);
Ausbilden eines gebogenen Ausgangsrohres (110), welches einen größeren Durchmesser aufweist als das Innenrohr (101) und wobei das Ausgangsrohr so gebogen wird, dass das Ausgangsrohr und das Innenrohr über eine gleichartig verlaufende neutrale Biegelinie verfügen;
Teilen des Ausgangsrohres (110) in ein erstes und ein zweites halbschalenartiges Rohrsegment (103, 104);
Positionieren des Innenrohres (101) in dem ersten halbschalenartigen Rohrsegment (103);
Zusammenfügen der beiden halbschalenartigen Rohrsegmente (103, 104) zur Ausbildung eines Außenrohres (102);
**dadurch gekennzeichnet, dass**
das Teilen des Ausgangsrohres entlang der neutralen Biegelinie (112) des Ausgangsrohres (110) erfolgt.

8. Verfahren nach Anspruch 7, wobei es sich bei dem Rohr um ein Rohr nach einem der Ansprüche 1 bis 4 handelt.

9. Verfahren nach Anspruch 7 oder 8, weiterhin aufweisend den Schritt:
Anfügen eines Flansches (109) an ein Ende (111) des Außenrohres (102).

10. Verfahren nach einem der Ansprüche 7 bis 9, weiterhin aufweisend den Schritt:
Aufbringen eines Oberflächenschutzes auf eine Innenseite und eine Außenseite des Außenrohres (102).

11. Verfahren nach einem der Ansprüche 7 bis 10, wobei das Zusammenfügen der beiden halbschalenartigen Rohrsegmente (103, 104) durch Schweißen erfolgt.

12. Verfahren nach Anspruch 11, wobei das Zusammenfügen der beiden halbschalenartigen Rohrsegmente (103, 104) durch Laserstrahlschweißen erfolgt.

## Claims

1. A double-wall pipe, in particular for a transport means, the pipe (100) comprising:
an outer pipe (102); and
an inner pipe (101) extending in the outer pipe,
wherein the inner pipe is designed to convey a fluid and is spaced apart from the outer pipe,
wherein the outer pipe (102) comprises two pipe segments (103, 104) in the form of half-shells which are joined together along their longitudinal edges (105, 106, 107, 108) in order to form the outer pipe (102),
wherein the two pipe segments (103, 104) of the outer pipe (102), which pipe segments are formed as half-shells, are made by splitting an initial pipe (110),
wherein the double-wall pipe is a bent pipe;
**characterized in that**
the longitudinal edges (105, 106, 107, 108) of the half-shell-like pipe segments (103, 104) are made by splitting the initial pipe (110) along a neutral bending line (112) of the bent initial pipe (110) and wherein the inner pipe (101) and the initial pipe (110) have a similarly extending neutral bending line (112).

2. The double-wall pipe according to claim 1,
wherein the inner pipe (101) is metallic.

3. The double-wall pipe according to any one of the preceding claims, wherein the outer pipe (102) is metallic.

4. The double-wall pipe according to any one of the preceding claims, wherein the double-wall pipe (100) is a fuel line or a hydraulic line.

5. A means of transport with a double wall pine according to any one of the claims 1 to 4.

6. The means of transport according to claim 5,
designed as an aircraft (300).

7. A method for producing a double-wall pipe (100), the method comprising the steps of:
forming a bent inner pipe (101);
forming a bent initial pipe (110) which has a larger diameter than the inner pipe (101), and wherein the initial pipe is bent such that the initial pipe and the inner pipe comprise a neutral bending line extending in a similar manner;
parting the initial pipe (110) into a first and a second pipe segment (103, 104) in the form of half-shells;
positioning the inner pipe (101) within the first pipe segment (103) in the form of a half-shell;
joining together the two pipe segments (103, 104) in the form of half-shells for forming an outer pipe (102),
**characterized in that**
parting of the initial pipe is accomplished along the neutral bending line (112) of the initial pipe (110).

8. The method according to claim 7,
wherein the pipe is a pipe according to any one of claims 1 to 4.

9. The method according to claim 7 or 8,
further comprising the step:
attaching a flange (109) to an end (111) of the outer pipe (102).

10. The method according to any one of claims 7 to 9,
further comprising the step:
applying a surface protection to an inner face and to an outer face of the outer pipe (102).

11. The method according to any one of claims 7 to 10,
wherein the joining together of the two pipe segments (103, 104) in the form of half-shells takes place by welding.

12. The method according to Claim 11,
wherein the joining together of the two pipe segments (103, 104) in the form of half-shells takes place by laser welding.

## Revendications

1. Tuyau à double paroi, en particulier destiné à un moyen de transport, le tuyau (100) comportant :
un tuyau extérieur (102) ;
un tuyau intérieur (101) s'étendant dans le tuyau extérieur ;
le tuyau intérieur étant conçu pour guider un fluide et étant disposé espacé du tuyau extérieur ;
le tuyau extérieur (102) comportant deux segments de tuyau de type demi-coque (103, 104), qui sont assemblés le long de leurs bords longitudinaux (105, 106, 107, 108) pour former le tuyau extérieur (102) ;
les deux segments de tuyau de type demi-coque (103, 104) du tuyau extérieur (102) étant fabriqués en divisant un tuyau initial (110) ;
le tuyau à double paroi étant un tuyau courbé ;
**caractérisé en ce que**
les bords longitudinaux (105, 106, 107, 108) des segments de tuyau de type demi-coque (103, 104) sont fabriqués en divisant le tuyau initial (110) le long d'une ligne de cintrage neutre (112) du tuyau initial (110) courbé et le tuyau intérieur (101) et le tuyau initial (110) disposant d'une ligne de cintrage neutre (112) s'étendant de la même manière.

2. Tuyau à double paroi selon la revendication 1,
dans lequel le tuyau intérieur (101) est métallique.

3. Tuyau à double paroi selon l'une des revendications précédentes,
dans lequel le tuyau extérieur (102) est métallique.

4. Tuyau à double paroi selon l'une des revendications précédentes,
dans lequel le tuyau à double paroi (100) est une conduite de carburant ou une conduite hydraulique.

5. Moyen de transport comprenant un tuyau à double paroi selon l'une des revendications 1 à 4.

6. Moyen de transport selon la revendication 5,
réalisé sous la forme d'un aéronef (300).

7. Procédé de fabrication d'un tuyau à double paroi (100) courbé, le procédé comportant les étapes consistant à :
former un tuyau intérieur (101) courbé ;
former un tuyau initial (110) courbé, qui présente un diamètre supérieur à celui du tuyau intérieur (101) et le tuyau initial étant courbé de telle manière que le tuyau initial et le tuyau intérieur disposent d'une ligne de cintrage neutre s'étendant de la même manière ;
diviser le tuyau initial (110) en un premier et un second segment de tuyau de type demi-coque (103, 104) ;
positionner le tuyau intérieur (101) dans le premier segment de tuyau de type demi-coque (103) ;
assembler les deux segments de tuyau de type demi-coque (103, 104) pour former un tuyau extérieur (102) ;
**caractérisé en ce que**
la division du tuyau initial se fait le long de la ligne de cintrage neutre (112) du tuyau initial (110).

8. Procédé selon la revendication 7,
dans lequel le tuyau est un tuyau selon l'une des revendications 1 à 4.

9. Procédé selon la revendication 7 ou 8,
comportant en outre l'étape consistant à :
ajouter une bride (109) à une extrémité (111) du tuyau extérieur (102).

10. Procédé selon l'une des revendications 7 à 9, comportant en outre l'étape consistant à :
appliquer un revêtement protecteur de surface sur un côté intérieur et un côté extérieur du tuyau extérieur (102).

11. Procédé selon l'une des revendications 7 à 10,
dans lequel l'assemblage des deux segments de tuyau de type demi-coque (103, 104) se fait par soudage.

12. Procédé selon la revendication 11,
dans lequel l'assemblage des deux segments de tuyau de type demi-coque (103, 104) se fait par soudage au laser.
